# EUROPEAN PATENT APPLICATION

(11) **EP 4 650 323 A1**
(43) Date of publication of application: **19.11.2025**
(21) Application number: 25176232.4
(22) Date of filing: 13.05.2025
(51) Int. Cl.: C01G 53/42, C01G 53/506, H01M 4/00

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(30) Priority: 13.05.2024 KR 20240062683
(71) Applicant: SK On Co., Ltd., Seoul 03161 (KR); SK innovation Co., Ltd., Seoul 03188 (KR)
(72) Inventor: KIM, Sang Bok, 34124 Daejeon (KR); KIM, Sung Beom, 34124 Daejeon (KR); PARK, Sang Min, 34124 Daejeon (KR); CHOI, Jae Young, 34124 Daejeon (KR); CHOI, Ji Hoon, 34124 Daejeon (KR)
(74) Representative: Stolmár & Partner Patentanwälte PartG mbB

(57) **Abstract**

A cathode active material for a lithium secondary battery according to embodiments of the present disclosure comprises a lithium-sulfur-metal-containing portion and lithium-transition metal oxide particles having a minimum particle diameter (Dmin) of greater than 1 µm, wherein a relative standard deviation of the sulfur signal values of the lithium-transition metal oxide particles, as measured repeatedly ten times by X-ray photoelectron spectroscopy (XPS) analysis, is 10.5% or less.

## Description

### [BACKGROUND OF THE INVENTION]

### 1. Field of the Invention

The disclosure of the present application relates to a cathode active material for a lithium secondary battery, a method of preparing the same, and a lithium secondary battery including the cathode active material.

### 2. Description of the Related Art

A secondary battery is a battery that can be repeatedly charged and discharged. With rapid progress of information and communication technology and display industries, the secondary battery has been widely applied to various portable electronic telecommunication devices such as a camcorder, a mobile phone, a laptop computer, etc. as their power sources. Recently, a battery pack including the secondary battery has also been developed and applied to eco-friendly automobiles such as an electric vehicle, a hybrid vehicle, etc., as their power sources.

Examples of the secondary battery may include a lithium secondary battery, a nickelcadmium battery, a nickel-hydrogen battery and the like. Among them, the lithium secondary battery has a high operating voltage and a high energy density per unit weight, making it advantageous in terms of charging speed and lightweight design. In this regard, the lithium secondary battery has been actively developed and applied to various industrial fields.

As the application scope of lithium secondary batteries continues to expand, longer cycle life, high capacity and operational stability are required. For example, the output characteristics and cycle life characteristics of the lithium secondary battery may degrade due to side reactions between a cathode active material and an electrolyte of the lithium secondary battery.

### [SUMMARY OF THE INVENTION]

According to an aspect of the present disclosure, a cathode active material for a lithium secondary battery having improved output characteristics and cycle life characteristics may be provided.

According to an aspect of the present disclosure, a method for preparing a cathode active material for a lithium secondary battery having improved output characteristics and cycle life characteristics may be provided.

In addition, according to an aspect of the present disclosure, a lithium secondary battery having improved output characteristics and cycle life characteristics may be provided.

A cathode active material for a lithium secondary battery according to exemplary embodiments of the present disclosure includes: lithium-transition metal oxide particles including a lithium-sulfur-metal-containing portion and having a minimum particle diameter (Dmin) of greater than 1 µm, wherein a relative standard deviation of the sulfur signal values of the lithium-transition metal oxide particles, as measured repeatedly ten times by X-ray photoelectron spectroscopy (XPS) analysis, is 10.5% or less.

In some embodiments, the cathode active material may include a plurality of the lithium-transition metal oxide particles, and the XPS analysis may be performed on a square area having a width of 0.9 mm and a height of 0.9 mm, which is fully filled with a plurality of lithium-transition metal oxide particles.

In some embodiments, the relative standard deviation may be 4.5% to 9.0%.

In some embodiments, the lithium-sulfur-metal-containing portion may include at least one selected from the group consisting of Al, Ti, Zr, W, Sr, Ba, Ta, Nb, Mo, K, B and Na.

In some embodiments, the lithium-transition metal oxide particles may include secondary particles formed by agglomeration of a plurality of primary particles, and the lithium-sulfur-metal-containing portion may be positioned between the primary particles or on the surface of the secondary particles.

In some embodiments, the sulfur content of the lithium-transition metal oxide particles may be 3000 ppm to 6000 ppm based on a total weight of the lithium-transition metal oxide particles.

In some embodiments, the minimum particle diameter (Dmin) of the lithium-transition metal oxide particles may be 2.1 µm to 2.7 µm.

A lithium secondary battery according to exemplary embodiments of the present disclosure includes: the cathode including the above-described cathode active material for a lithium secondary battery; and an anode disposed opposite to the cathode.

In accordance with a method for preparing a cathode active material for a lithium secondary battery according to exemplary embodiments of the present disclosure, first preliminary lithium-transition metal oxide particles are prepared. The first preliminary lithium-transition metal oxide particles, a metal oxide, and a sulfur compound are dry mixed to form a mixture. Second preliminary lithium-transition metal oxide particles are prepared by adding a solvent to the mixture and drying it. Lithium-transition metal oxide particles including a lithium-sulfur-metal-containing portion and having a minimum particle diameter (Dmin) of greater than 1 µm are prepared by calcining the second preliminary lithium-transition metal oxide particles at a temperature higher than that of the drying. A relative standard deviation of the sulfur signal values of the lithium-transition metal oxide particles, as measured repeatedly ten times by X-ray photoelectron spectroscopy (XPS) analysis, is 10.5% or less.

In some embodiments, the metal oxide may include at least one selected from the group consisting of Al₂O₃, TiO₂, Ti₂O₃, ZrO₂, H₃BO₃, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃ and (NH₄)₂MoO₄.

In some embodiments, the sulfur compound may include at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄ and SrSO₄.

In some embodiments, a sulfur content of the sulfur compound may be 2000 ppm to 4000 ppm based on the total weight of the mixture.

In some embodiments, a content of the solvent may be 2% by weight to 11% by weight based on the total weight of the mixture.

In some embodiments, the drying may be performed at a temperature of 110 °C to 240 °C.

In some embodiments, the calcination may be performed at a temperature of 300 °C to 500 °C.

In some embodiments, the method may further include pulverizing the mixture after the drying and before the calcination.

According to an embodiment of the present disclosure, impurities on the surface of the cathode active material may be reduced, and the capacity characteristics and cycle life characteristics of the lithium secondary battery may be improved.

According to an embodiment of the present disclosure, the high-temperature storage characteristics of the lithium secondary battery may be improved. In addition, the amount of gas from the lithium secondary battery may be reduced.

The cathode active material for a lithium secondary battery of the present disclosure and the lithium secondary battery including the same may be widely applied in green technology fields, such as electric vehicles, battery charging stations, as well as solar power generation, wind power generation, and the like, which use the batteries. The cathode active material for a lithium secondary battery of the present disclosure and the lithium secondary battery including the same may be used in eco-friendly electric vehicles, hybrid vehicles, and the like, which are aimed at mitigating climate change by reducing air pollution and greenhouse gas emission.

### [BRIEF DESCRIPTION OF THE DRAWINGS]

The above and other objects, features and other advantages of the present disclosure will be more clearly understood from the following detailed description taken in conjunction with the accompanying drawings, in which:
FIG. 1 is a flowchart for describing processes of a method of preparing a cathode active material according to exemplary embodiments;
FIGS. 2 and 3 are schematic plan and cross-sectional views of the lithium secondary battery according to exemplary embodiments, respectively;
FIG. 4 is a graph illustrating sulfur signal values of lithium-transition metal oxide particles of Example 1 obtained by X-ray photoelectron spectroscopy (XPS) analysis;
FIGS. 5 to 9 are scanning electron microscope (SEM) images of cathode active materials of Examples 1, 2, 8 and 10, and Comparative Example 8, respectively;
FIGS. 10 to 12 are Q-map images of cathode active materials of Example 2, and Comparative Examples 6 and 8, respectively, obtained by scanning electron microscope-energy dispersive X-ray spectroscopy (SEM-EDS).

### [DETAILED DESCRIPTION OF THE INVENTION]

Examples according to the disclosure of the present application provide a cathode active material for a lithium secondary battery (hereinafter, also be abbreviated as a "cathode active material"). In addition, a method for preparing the cathode active material and a lithium secondary battery (hereinafter, also be abbreviated as a "secondary battery") including the cathode active material are provided.

Hereinafter, the embodiments of the present disclosure will be described in detail. However, these embodiments are merely examples, and the present disclosure is not limited to the specific embodiments described as example.

In exemplary embodiments, the cathode active material may include lithium (Li)-transition metal oxide particles. The lithium-transition metal oxide particles may further include at least one of cobalt (Co), manganese (Mn) and aluminum (Al). For example, the cathode active material may include a plurality of the lithium-transition metal oxide particles.

In some embodiments, the cathode active material or the lithium-transition metal oxide particles may include a layered structure or a crystal structure represented by Formula 1 below.

[Formula 1] LiₓNiₐM_{b}O_{2+z}

In Formula 1, x, a, b and z may satisfy 0.9≤x≤1.2, 0.5≤a≤0.99, 0.01<b≤0.5, -0.5≤z≤0.1 may be satisfied. As described above, M may include Co, Mn and/or Al.

The chemical structure represented by Formula 1 indicates a bonding relationship between elements included in the layered structure or crystal structure of the cathode active material or the lithium-transition metal oxide particles, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of the additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together the main active elements to form a bond, and it should be understood that this case is also included within the chemical structure range represented by Formula 1.

The auxiliary element may include, for example, at least one of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may act as an auxiliary active element which contributes to the capacity/output activity of the cathode active material together with Co or Mn like Al.

For example, the cathode active material or the lithium-transition metal oxide particles may include a layered structure or crystal structure represented by Formula 1-1 below.

[Formula 1-1] LiₓNiₐM1_{b1}M2_{b2}O_{2+z}

In Formula 1-1, M1 may include Co, Mn, and/or Al. M2 may include the auxiliary elements described above. In Formula 1-1, x, a, b1, b2 and z may satisfy 0.9≤x≤1.2, 0.5≤a≤0.99, 0.01≤b1+b2≤0.5, -0.5≤z≤0.1 may be satisfied.

The cathode active material may further include a doping element. For example, elements which are substantially the same as or similar to the above-described auxiliary elements may be used as the doping element. For example, the above-described elements may be used as the doping element alone or in combination of two or more thereof.

The doping element may be present on the surface of the lithium-transition metal oxide particles, or may penetrate through the surface of the lithium-transition metal oxide particles to become incorporated into the bonding structure represented by Formula 1 or Formula 1-1 above.

In some embodiments, the cathode active material may include a nickel-cobalt-manganese (NCM)-based lithium oxide. In this case, an NCM-based lithium oxide with an increased nickel content may be used.

Nickel may be provided as a transition metal associated with the output and capacity of the lithium secondary battery. Therefore, as described above, by employing a high-content (High-Ni) composition in the cathode active material, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

A content of Ni in the NCM-based lithium oxide (e.g., a molar fraction of nickel based on the total number of moles of nickel, cobalt and manganese) may be 0.5 or more, 0.6 or more, 0.7 or more, 0.8 or more, 0.9 or more, or 0.95 or more. In some embodiments, the content of Ni may be 0.8 to 0.98, 0.82 to 0.98, 0.83 to 0.98, 0.84 to 0.98, 0.85 to 0.98, 0.88 to 0.98, or 0.9 to 0.98.

In exemplary embodiments, the lithium-transition metal oxide particles may include a lithium-sulfur-metal-containing portion.

In some embodiments, the lithium-transition metal oxide particle may include secondary particles formed by agglomeration of a plurality of primary particles, and the lithium-sulfur-metal-containing portion may be positioned between the primary particles or on the surface of the secondary particles.

For example, the lithium-sulfur-metal-containing portion may be formed by a combination of residual lithium, sulfur and metal elements, which are present between the primary particles of lithium-transition metal oxide particles or on the surface of secondary particles. The lithium-sulfur-metal-containing portion may have relatively higher structural stability than impurities (e.g., residual lithium). Accordingly, impurities on the surface of the lithium-transition metal oxide particles may be reduced, thereby improving the capacity characteristics and cycle life characteristics of the secondary battery. For example, the residual lithium may include lithium hydroxide (LiOH), lithium carbonate (Li₂CO₃) and the like.

In some embodiments, the primary particles present on the surface of the lithium-nickel transition metal oxide particles may have a hexagonally close-packed structure. Accordingly, a high amount of lithium and transition metal elements may be included in a stable layered structure even in a small space, thereby improving the capacity characteristics and cycle life characteristics of the secondary battery.

In one embodiment, the lithium-sulfur-metal-containing portion may include a compound including Li₂SO₄ and a metal element.

In one embodiment, the metal element included in the lithium-sulfur-metal-containing portion may include at least one selected from the group consisting of Al, Ti, Zr, W, Sr, Ba, Ta, Nb, Mo, K, B and Na. For example, the metal element and the lithium-sulfur-containing compound may be co-present in the lithium-sulfur-metal-containing portion.

In one embodiment, the lithium-sulfur-metal-containing portion may include at least one selected from the group consisting of Li₂SO₄, Li(NH₄)SO₄, Li(N₂H₅)SO₄, LiNaSO₄, LiKSO₄, Li₂NaK(SO₄)₂ Li₂S₂O₆, Li₂Mg₂(SO₄)₃, LiB(SO4)2, LiB(S₂O₇)₂ and Li₅B(SO₄)₄.

In some embodiments, the lithium-sulfur-metal-containing portion may include a monoclinic crystal structure. Accordingly, the specific surface area of the lithium-transition metal oxide particles may be reduced, and the surface of the primary particles and/or the surface of the secondary particles may be protected by the lithium-sulfur-metal-containing portion, thereby improving the cycle life characteristics and operating stability of the secondary battery.

The lithium-sulfur-metal-containing portion having a monoclinic crystal structure may enable lithium diffusion through a paddle-wheel mechanism. Accordingly, the ionic conductivity of the cathode active material may be improved and the resistance may be reduced, thereby improving the output characteristics.

For example, the paddle-wheel mechanism may be a phenomenon in which oxygen-containing elements rotate around sulfur ions forming anions, thereby facilitating the migration of lithium ions and reducing the activation energy required for lithium ion migration.

For example, the crystal structure of the lithium-sulfur-metal-containing portion may be identified using selected area electron diffraction (SAED) analysis via transmission electron microscopy (TEM).

In exemplary embodiments, the relative standard deviation of the sulfur signal values of the lithium-transition metal oxide particles, as measured repeatedly ten times by X-ray photoelectron spectroscopy (XPS) analysis, may be 10.5% or less, and in some embodiments, 4.5% to 9.0%. Within the above range, the lithium-sulfur-metal-containing portion may be uniformly distributed on the surface of the lithium-transition metal oxide particles. Accordingly, the cycle life characteristics and high-temperature storage characteristics of the lithium secondary battery may be improved, and the amount of gas generation may be reduced.

The XPS analysis may be performed on a square area having a width of 0.9 mm and a height of 0.9 mm, which is fully filled with a plurality of lithium-transition metal oxide particles.

For example, a rectangular container having a width of 0.9 mm and a height of 0.9 mm may be filled with lithium-transition metal oxide particles, and the XPS analysis may be repeated ten times on the rectangular container.

For example, the XPS analysis may be performed on a region within 10 nm from the surface of the lithium-transition metal oxide particles toward the center. Accordingly, the elemental composition at the surface of the lithium-transition metal oxide particles may be obtained.

For example, in a graph obtained by the XPS analysis, the horizontal axis may be the binding energy in units of eV, and the vertical axis may be the sulfur signal value in units of cps. After repeatedly measuring the sulfur signal value ten times, the relative standard deviation may be calculated.

The relative standard deviation may be defined as a value obtained by dividing the standard deviation of sulfur signal values, as measured by XPS analysis repeated ten times on the lithium-transition metal oxide particles, by the mean of the sulfur signal values, and multiplying the result by 100.

In one embodiment, the cathode active material that is the target of the above-described measurement method may be a cathode active material prepared by the preparation method described below.

In one embodiment, the cathode active material that is the target of the above-described measurement method may be a cathode active material recovered from a lithium secondary battery or a cathode.

For example, a cathode may be obtained by disassembling a lithium secondary battery. The cathode may be introduced into an organic solvent (e.g., N-methyl-2-pyrrolidone (NMP)) and maintained for about 5 minutes to dissolve the binder. After removing the cathode current collector, the organic solvent may be evaporated and removed.

After the solvent is removed, the remaining cathode active material and conductive material may be placed in a container together with distilled water, stirred for about 1 hour, and then left to stand for about 10 minutes to separate the conductive material and cathode active material.

The conductive material separated from the upper layer of distilled water may be removed, and the cathode active material that has settled at the bottom of the container may be collected. The cathode active material may be dried in a chamber at about 100 °C for about 2 hours and used as a sample of the cathode active material for XPS analysis.

In exemplary embodiments, the lithium-transition metal oxide particles may have a minimum particle diameter (Dmin) of greater than 1 µm, and in some embodiments, may range from 2.1 µm to 2.7 µm. Within the above range, crack formation during the crushing or rolling process due to the agglomeration of sulfur compounds and small-sized particles may be prevented. Accordingly, the cycle life characteristics and high-temperature storage characteristics of the lithium secondary battery may be improved, and the amount of gas generation may be reduced.

The minimum particle diameter (Dmin) may refer to the smallest particle diameter in the particle size distribution obtained from particle volume.

By simultaneously controlling the relative standard deviation and the minimum particle diameter (Dmin), the agglomeration of small-sized particles, sulfur compounds, and metal elements may be suppressed, and the lithium-sulfur-metal-containing portions may be uniformly distributed, thereby enhancing the cycle life characteristics of the secondary battery.

In some embodiments, a sulfur content of the lithium-transition metal oxide particles may be 3000 ppm to 6000 ppm based on the total weight of the lithium-transition metal oxide particles. Within the above range, the lithium-sulfur-metal-containing portion may be sufficiently formed, while maintaining or improving the capacity characteristics.

Hereinafter, the method for preparing the cathode active material for a lithium secondary battery as described above will be specifically described.

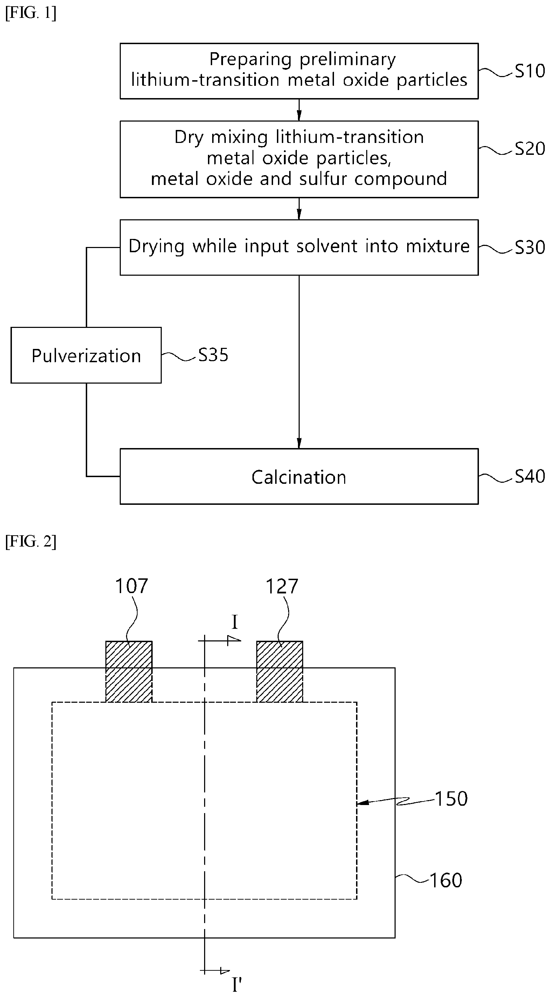

FIG. 1 is a process flowchart for describing the method for preparing a cathode active material according to exemplary embodiments.

Referring to FIG. 1, first preliminary lithium-transition metal oxide particles may be prepared (e.g., step S10).

For example, the first preliminary lithium-transition metal oxide particles may be prepared by reacting a nickel-containing transition metal precursor with a lithium precursor. The transition metal precursor (e.g., a Ni-Co-Mn precursor) may be prepared through a co-precipitation reaction.

For example, the transition metal precursor may be prepared through a co-precipitation reaction of metal salts. The metal salts may include nickel salts, manganese salts, and/or cobalt salts.

The nickel salts may include nickel sulfate, nickel hydroxide, nickel nitrate, nickel acetate, or a hydrate thereof, etc. Examples of the manganese salts may include manganese sulfate, manganese acetate, or a hydrate thereof, etc. Examples of the cobalt salts may include cobalt sulfate, cobalt nitrate, cobalt carbonate, or a hydrate thereof, etc. These may be used alone or in combination of two or more thereof.

The metal salts may be mixed with a precipitant and/or a chelating agent in a ratio that satisfies the content of each metal or the concentration ratios described with reference to Formula 1 to prepare an aqueous solution. The aqueous solution may be subjected to co-precipitation in a reactor to prepare the transition metal precursor.

The precipitant may include an alkaline compound such as sodium hydroxide (NaOH), sodium carbonate (Na₂CO₃) and the like. The chelating agent may include, for example, ammonium hydroxide (e.g., NH₃H₂O), ammonium carbonate (e.g., NH₃HCO₃) and the like.

For example, the co-precipitation reaction may be performed at a temperature of about 40 °C to 60 °C for about 24 hours to 72 hours.

The lithium precursor compound may include, for example, lithium carbonate, lithium nitrate, lithium acetate, lithium oxide, lithium hydroxide, etc. These compounds may be used alone or in combination of two or more thereof.

In exemplary embodiments, the first preliminary lithium-transition metal oxide particles, a metal oxide, and a sulfur compound may be dry mixed to form a mixture (e.g., step S20).

The dry mixing refers to the mixing of the first preliminary lithium-transition metal oxide particles, the metal oxide powder, and the sulfur compound powder without a solvent.

For example, the metal oxide may be provided as the metal source for the lithium-sulfur-metal-containing portion, and the sulfur compound may be provided as the sulfur source for the lithium-sulfur-metal-containing portion.

In some embodiments, the metal oxide may include at least one selected from the group consisting of Al₂O₃, TiO₂, Ti₂O₃, ZrO₂, B₂O₃, H₃BO₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃ and (NH₄)₂MoO₄.

In some embodiments, the amount of the metal oxide may be 0.1 mol% to 1.0 mol% based on the total number of moles of the first preliminary lithium-transition metal oxide particles. Within the above range, the output characteristics and capacity characteristics of the cathode active material may be improved.

In some embodiments, the sulfur compound may include a sulfonyl compound.

For example, the sulfur compound may include at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄ and SrSO₄.

In some embodiments, the sulfur content of the sulfur compound may be 2000 ppm to 4000 ppm based on the total weight of the mixture. Within the above range, the lithium-sulfur-metal-containing portion may be sufficiently formed, while maintaining or improving the capacity characteristics.

In exemplary embodiments, second preliminary lithium-transition metal oxide particles may be prepared by drying while adding a solvent to the mixture and the resulting mixture (e.g., step S30).

For example, the mixture may be introduced into a dryer, a solvent may be added, and vacuum drying may be performed to form a preliminary lithium-sulfur-metal-containing portion. For instance, the solvent input and the vacuum drying may be performed simultaneously.

For example, the preliminary lithium-sulfur-metal-containing portion may include substantially the same material as the lithium-sulfur-metal-containing portion. The preliminary lithium-sulfur-metal-containing portion may exhibit a state in which it is relatively loosely bound between the primary particles of the second preliminary lithium-transition metal oxide particles or on the surface of the secondary particles prior to calcination.

For example, the solvent input may be performed by pouring, dropping, spraying, mist introduction, etc.

For example, the solvent input and the drying may be performed using a vertical helical conical dryer, a horizontal shovel-type conical dryer, or a vertical helical cylindrical dryer, etc.

In one embodiment, stirring may be performed concurrently with the drying. For example, the mixture and the solvent may be dried while being stirred at low speed (e.g., 100 rpm or less). Accordingly, the preliminary lithium-sulfur-metal-containing portion may be uniformly formed while preventing cracks in the first preliminary lithium-transition metal oxide particles.

After forming a mixture through dry mixing, a solvent may be added to the mixture during drying. Accordingly, aggregation of the first preliminary lithium-transition metal oxide particles and the sulfur compound may be suppressed, thereby allowing the lithium-sulfur-metal-containing portion to be uniformly formed between the primary particles of the lithium-transition metal oxide particles or on the surface of the secondary particles.

According to some embodiments, the washing treatment in which water is added in an amount substantially the same as or similar to that of the first preliminary lithium-transition metal oxide particles may not be performed. Accordingly, damage or collapse of the layered structure of the primary particles may be prevented.

In some embodiments, the content of the solvent may be 2 wt% to 11 wt% based on the total weight of the mixture. Within the above range, impurities in the first preliminary lithium-transition metal oxide particles may be sufficiently removed, while preventing damage or collapse of the layered structure of the primary particles, which may otherwise occur during washing treatment.

For example, the solvent may be pure water or ultrapure water.

In some embodiments, the drying may be performed at a temperature of 110 °C to 240 °C. The drying temperature may refer to the internal temperature of the dryer where drying is performed, rather than the temperature of the heat source of the dryer. Within the above range, solvent drying and the formation of the preliminary lithium-sulfur-containing portion may be performed simultaneously, and the cycle life characteristics and output characteristics of the secondary battery may be further improved.

For example, the sulfur compound and/or the metal oxide may react with the residual lithium present on the surface of the first preliminary lithium-transition metal oxide particles to be converted into the preliminary lithium-sulfur-metal-containing portion. Accordingly, the residual lithium on the surface of the lithium-transition metal oxide particles may be reduced, and the cycle life characteristics and output characteristics of the secondary battery may be improved.

In some embodiments, the mixture may be pulverized before calcination after drying (e.g., step S35). Accordingly, agglomerates of the first preliminary lithium-transition metal oxide particles and the sulfur compound may be pulverized, and the cycle life characteristics of the secondary battery may be further improved.

For example, the pulverization may be performed using a high speed mixer, an air classifier mill (ACM), or a disc mill, etc.

In exemplary embodiments, lithium-transition metal oxide particles including a lithium-sulfur-metal-containing portion may be prepared by calcining the second preliminary lithium-transition metal oxide particles at a temperature higher than that of the drying (e.g., step S40).

The calcination may be performed at a temperature of 300 °C to 500 °C. Within the above range, the preliminary lithium-sulfur-metal-containing portion may be converted into a lithium-sulfur-metal-containing portion located between the primary particles of the lithium-transition metal oxide particles or on the surface of the secondary particles, and may be stably positioned between the primary particles or on the surface of the secondary particles. Accordingly, the cycle life characteristics of the secondary battery may be further improved.

According to an embodiment, the calcination may be performed under an oxygen atmosphere.

The minimum particle diameter (Dmin) of the lithium-transition metal oxide particles prepared according to the above-described manufacturing method may be adjusted to be greater than 1 µm through pulverization and/or classification.

The relative standard deviation of the sulfur signal values of the lithium-transition metal oxide particles prepared according to the above-described manufacturing method, as measured by XPS analysis repeated ten times, may be 10.5% or less.

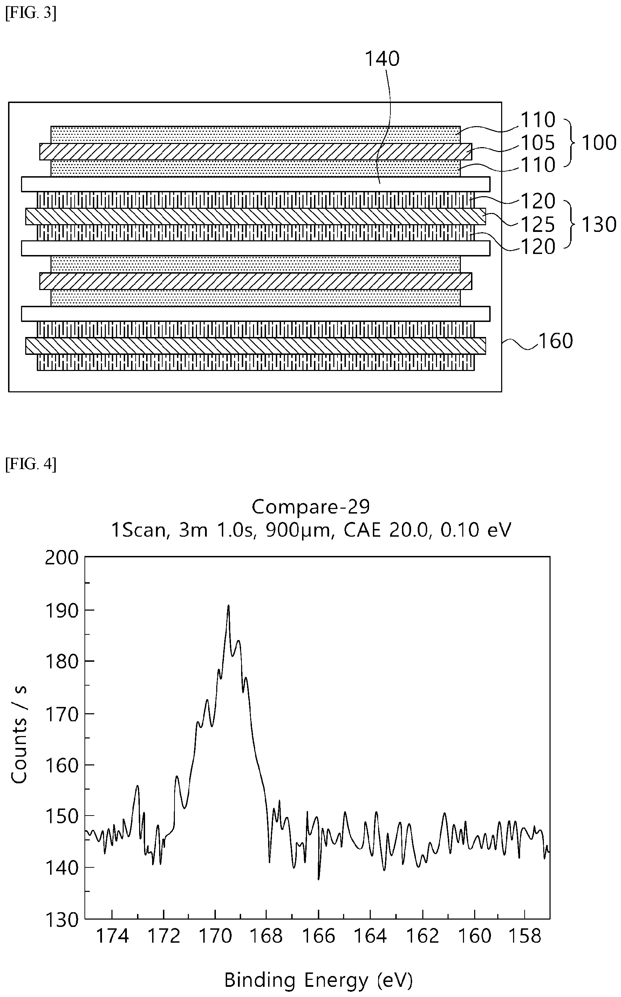

FIGS. 2 and 3 are schematic plan and cross-sectional views illustrating a lithium secondary battery according to exemplary embodiments, respectively. For example, FIG. 3 is a cross-sectional view taken on line I-I' of FIG. 2 in the thickness direction.

The structures illustrated in FIGS. 2 and 3 are examples for the convenience of description, and the structure of the lithium secondary battery according to the embodiments of the present disclosure is not limited thereto.

Referring to FIG. 2 and FIG. 3, the lithium secondary battery may include a cathode 100 including the above-described cathode active material and an anode 130 disposed opposite to the cathode 100.

The cathode 100 may include a cathode active material layer 110 formed by applying the cathode active material to at least one surface of a cathode current collector 105.

The cathode current collector 105 may include stainless steel, nickel, aluminum, titanium, copper, or an alloy thereof. The cathode current collector 105 may also include aluminum or stainless steel having a surface treated with carbon, nickel, titanium, copper or silver. For example, the cathode current collector 105 may have a thickness of 10 µm to 50 µm.

The cathode active material layer 110 may include the above-described cathode active material.

The cathode active material may include a plurality of the lithium-transition metal oxide particles. For example, a total content of the lithium-transition metal oxide particles based on the total weight of the cathode active material may be 50 wt% or more. In some embodiments, the total content of the lithium-transition metal oxide particles based on the total weight of the cathode active material may be 60 wt% or more, 70 wt% or more, 80 wt% or more, or 90 wt% or more.

In one embodiment, the cathode active material may be substantially composed of the lithium-transition metal oxide particles.

The cathode active material may be mixed in a solvent to prepare a cathode slurry. The cathode slurry may be applied to at least one surface of the cathode current collector 105, then dried and pressed to prepare the cathode active material layer 110. The coating may include a method such as gravure coating, slot die coating, simultaneous multilayer die coating, imprinting, doctor blade coating, dip coating, bar coating or casting. The cathode active material layer 110 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, vapor-grown carbon fibers (VGCFs), carbon nanotubes (CNTs), carbon fibers, and/or metal-based conductive materials, including perovskite materials, such as tin, tin oxide, titanium oxide, LaSrCoO₃, and LaSrMnO₃. These may be used alone or in combination of two or more thereof.

The cathode slurry may further include a thickener and/or dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include a copper foil, a nickel foil, a stainless steel foil, a titanium foil, a nickel foam, a copper foam, a polymer substrate coated with conductive metal and the like. These may be used alone or in combination of two or more. For example, the anode current collector 125 may have a thickness of 10 µm to 50 µm.

The anode active material layer 120 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), mesophase pitch-based carbon fiber (MPCF) or the like.

The crystalline carbon may include graphite-based carbon such as natural graphite, artificial graphite, graphite cokes, graphite MCMB, graphite MPCF or the like.

The lithium metal may include pure lithium metal and/or lithium metal having a protective layer formed thereon for suppressing dendrite growth and the like. In one embodiment, a lithium metal-containing layer deposited or applied to the anode current collector 125 may also be used as the anode active material layer 120. In one embodiment, a lithium thin film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, SiOₓ (0<x<2), metal-doped SiOₓ (0<x<2), a silicon-carbon composite, etc.

The metal may include lithium and/or magnesium, and the metal-doped SiOₓ (0<x<2) may include a metal silicate.

The anode active material may be mixed in a solvent to prepare an anode slurry. The anode slurry may be applied/deposited to the anode current collector 125, then dried and pressed to prepare the anode active material layer 120. The coating may include a method such as gravure coating, slot die coating, simultaneous multilayer die coating, imprinting, doctor blade coating, dip coating, bar coating or casting, etc. The anode active material layer 120 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow a flow of ions to occur. For example, the separator may have a thickness of 10 µm to 20 µm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be applied to the polymer film or dispersed within the polymer film to improve heat resistance.

The separator 140 may have a single-layer or multi-layer structure including the above-described polymer film and/or non-woven fabric.

According to exemplary embodiments, an electrode cell is defined by the cathode 100, the anode 130 and the separator 140, and a plurality of electrode cells are stacked to form, for example, a jelly roll type electrode assembly 150. For example, the electrode assembly 150 may be formed by winding, stacking, z-folding, stack-folding, etc. the separator 140.

The electrode assembly 150 may be housed in a case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂]PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, a solid electrolyte may also be used in place of the above-described non-aqueous electrolyte. In this case, the lithium secondary battery may be manufactured in the form of an all-solid-state battery. In addition, a solid electrolyte layer may also be disposed between the cathode 100 and the anode 130 in place of the above-described separator 140.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may also include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIGS. 2 and 3, electrode tabs (a cathode tab and an anode tab) may protrude from the cathode current collector 105 and the anode current collector 125, respectively, which belong to each electrode cell, and may extend to one side of the case 160. The electrode tabs may be fused together with the one side of the case 160 to form electrode leads (a cathode lead 107 and an anode lead 127) that extend or are exposed to the outside of the case 160.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

### Example 1

### (1) Preparation of lithium-transition metal oxide particles

### 1) Preparation of first preliminary lithium-transition metal oxide particles (S10)

NiSO₄, CoSO₄, and MnSO₄ were input and mixed in a molar ratio of 88:9:3 to in distilled water, from which dissolved oxygen had been removed by bubbling N₂ for 24 hours, to prepare a mixed solution. The mixture was input into a reactor at 50 °C, and a co-precipitation reaction was performed for 48 hours using NaOH and NH₃H₂O as a precipitant and a chelating agent, to obtain Ni_{0.88}Co_{0.09}Mn_{0.03}(OH)₂ as a transition metal precursor. The obtained precursor was dried at 80 °C for 12 hours, and then further dried at 110 °C for 12 hours.

Lithium hydroxide and the transition metal precursor were added to a dry high-speed mixer in a ratio of 1.01:1, and uniformly mixed for 5 minutes. The mixture was placed in a calcination furnace, heated to 700 °C to 720 °C at a heating rate of 2 °C/min, then maintained at 700 °C to 720 °C for 10 hours. Oxygen was continuously supplied at a flow rate of 20 L/min during the heating and calcination. After completion of the calcination, the mixture was naturally cooled to room temperature, then pulverized and classified to obtain first preliminary lithium-transition metal oxide particles in the form of secondary particles having a composition of LiNi_{0.88}Co_{0.09}Mn_{0.03}O₂ (median particle diameter (D50): 10 µm).

### 2) Formation of mixture (S20)

The first preliminary lithium-transition metal oxide particles, Al₂O₃ powder and WO₃ powder as metal oxides and (NH₄)₂SO₄ powder as a sulfur compound were dry mixed to form a mixture.

The contents of Al₂O₃ and WO₃ were 0.20 mol% each (total metal oxide content: 0.40 mol%) based on the total number of moles of the first preliminary lithium-transition metal oxide particles. The amount of (NH₄)₂SO₄ added was adjusted so that the sulfur content of the sulfur compound was 3000 ppm based on the total weight of the mixture.

### 3) Solvent input and drying (S30)

The mixture was introduced into a vertical helical conical dryer (OKAWARA MFG, model number: RM-25VD-SR) using a thermal oil heating method. Pure water, in an amount of 5 wt% based on the total weight of the mixture, was added to the dryer and vacuum drying was performed to prepare second preliminary lithium-transition metal oxide particles including preliminary lithium-sulfur-metal-containing portions. The internal temperature (drying temperature) of the dryer was adjusted to 170 °C. The internal temperature of the dryer was measured by a thermometer installed inside the dryer.

The mixture and pure water were slowly stirred at a speed of 100 rpm or less during the vacuum drying.

The vacuum drying was performed under the following conditions.
Set temperature of thermal oil (heat source): 200 °C
Internal temperature of the dryer: 170 °C
Drying time: 6 hours
Reactor size: 25 L
Amount of the mixture: 30 kg
Stirring speed: 80 rpm
Solvent input speed: 0.5 L/min
Solvent temperature: -25 °C to 45 °C

### 4) Pulverization (S35)

The second preliminary lithium-transition metal oxide particles were introduced into a high-speed mixer (Nippon Coke & Engineering, model number: FM20C/I) and pulverized.

The pulverization was performed under the following conditions.
Mixer reactor size: 20 L
Input amount of second preliminary lithium-transition metal oxide particles: 15 kg
Mixer reactor temperature: maintained at room temperature using cooling water
Lower blade: standard type blade
Upper blade: grinding type blade
Pulverization speed: 700 rpm
Pulverization time: 20 min

### 5) Calcination (S40)

The second preliminary lithium-transition metal oxide particles were placed in a calcination furnace, and oxygen was supplied at a flow rate of 20 L/min while the temperature was increased to 400 °C at a heating rate of 2 °C/min. Then, the temperature was maintained at 400 °C for 10 hours. The resulting calcined product was classified using a 325 mesh sieve to obtain lithium-transition metal oxide particles.

### (2) Manufacture of lithium half-cell

The lithium-transition metal oxide particles were used as the cathode active material to manufacture a lithium half-cell.

Specifically, the cathode active material, Denka Black as a conductive material, and PVDF as a binder were mixed in a mass ratio of 93:5:2 to prepare a cathode slurry, which was then applied to an aluminum current collector, dried, and pressed to prepare a cathode. After pressing, the density of the cathode was adjusted to 3.3 g/cm³.

Lithium metal was used as an anode active material.

The cathode and anode prepared as described above were each notched into circular shapes having diameters of Φ14 and Φ16, respectively, and laminated with a separator (polyethylene, thickness: 13 µm) notched into Φ19 interposed between the cathode and the anode to form an electrode cell. ΦN (N is a positive number) may denote a circular shape having a diameter of N mm.

The electrode cell was placed in a coin cell outer case of a standard (CR2032) having a diameter of 20 mm and a height of 3.2 mm, followed by electrolyte injection and assembly. Thereafter, aging was carried out for 12 hours or more to allow the electrolyte to be impregnated into the electrode.

A 1M LiPF6 solution prepared using a mixed solvent of EC/EMC (30/70; volume ratio) was used as the electrolyte.

Formation charging and discharging were performed on the secondary battery manufactured as described above (charging conditions: CC-CV 0.1C 4.3V 0.005C CUT-OFF, discharging condition: CC 0.1C 3.0V CUT-OFF).

### (3) Manufacture of lithium secondary battery

A lithium secondary battery was manufactured using the lithium-transition metal oxide particles as a cathode active material.

Specifically, the cathode active material, Denka Black and CNTs as conductive materials, and PVDF as a binder were mixed in a mass ratio of 97.7:0.4:0.6:1.3 to prepare a cathode slurry, which was then applied to an aluminum current collector, dried, and pressed to prepare a cathode. After pressing, the density of the cathode was adjusted to 3.69 g/cm³.

An anode slurry was prepared, including a mixture of 47.25 wt% of natural graphite and 47.25 wt% of artificial graphite as an anode active material, 3 wt% of flake-type graphite (KS6) as a conductive material, 1.2 wt% of styrene-butadiene rubber (SBR) as a binder, and 1.3 wt% of carboxymethyl cellulose (CMC) as a thickener. The anode slurry was applied to a copper substrate, then dried and pressed to prepare an anode.

Fourteen cathodes and fifteen anodes were respectively notched into a predetermined size and stacked, then an electrode cell was fabricated by interposing a separator (polyethylene, thickness 25 µm) between the cathode and anode. Thereafter, tap parts of the cathode and the anode were welded, respectively. The assembly of the welded cathode/separator/anode was placed into a pouch, and three sides of the pouch were sealed, leaving one side open for electrolyte injection ("electrolyte injection side"). At this time, a portion having the electrode tab was included in the sealing part. After injecting the electrolyte through the electrolyte injection side, the remaining electrolyte injection side was also sealed, followed by allowing it to be impregnated for 12 hours or more to manufacture a lithium secondary battery.

The electrolyte used herein was prepared by adding 1 wt% of vinylene carbonate (VC) and 0.5 wt% of 1,3-propene sultone (PRS) based on the total weight of the solution to 1M LiPF₆ solution prepared using a mixed solvent of EC/EMC (25/75; volume ratio).

### Examples 2 to 25, and Comparative Examples 7 and 8

Cathode active materials, lithium half-cells, and lithium secondary batteries were manufactured in the same manner as in Example 1, except that the types of metal oxides, types of sulfur compounds, sulfur content (input amount) based on the total weight of the mixture, pure water content (input amount) based on the total weight of the mixture, drying temperature (internal temperature of the dryer), calcination temperature, and minimum particle diameter after classification (Dmin) were changed or adjusted as shown in Tables 1 and 2 below, and that pulverization (S35) was not performed.

Even though the types of metal oxides and sulfur compounds were changed, their contents were maintained at the same levels as in Example 1.

### Comparative Example 1

A lithium half-cell and a lithium secondary battery were manufactured in the same manner as in Example 1, except that the first preliminary lithium-transition metal oxide particles were used as a cathode active material.

### Comparative Example 2

(NH₄)₂SO₄ as a sulfur compound was added to pure water in an amount of 5 wt% based on the weight of the first preliminary lithium-transition metal oxide particles, and stirred to prepare a sulfur compound aqueous solution.

A mixture was prepared by mixing the first preliminary lithium-transition metal oxide particles and the sulfur compound aqueous solution (without adding any metal oxide).

The amount of (NH₄)₂SO₄ was adjusted so that the sulfur content of the sulfur compound was 3000 ppm based on the total weight of the first preliminary lithium-transition metal oxide particles and the sulfur compound.

The mixture was vacuum-dried in a dryer with the same equipment and conditions as in Example 1 to prepare second preliminary lithium-transition metal oxide particles. The internal temperature (drying temperature) of the dryer was adjusted to 170 °C.

A cathode active material, a lithium half-cell, and a lithium secondary battery were manufactured in the same manner as in Example 1, except that the above-described contents and the pulverization (S35) were not performed.

### Comparative Example 3

The first preliminary lithium-transition metal oxide particles, Al₂O₃ powder and WO₃ powder were dry mixed to form a first mixture. The contents of Al₂O₃ and WO₃ were 0.2 mol% each (total metal oxide content: 0.4 mol%) based on the total number of moles of the first preliminary lithium-transition metal oxide particles.

A second mixture was prepared by mixing the first mixture and the sulfur compound aqueous solution of Comparative Example 2.

The mixture was vacuum-dried in a dryer with the same equipment and conditions as in Example 1 to prepare second preliminary lithium-transition metal oxide particles. The internal temperature (drying temperature) of the dryer was adjusted to 170 °C.

A cathode active material, a lithium half-cell, and a lithium secondary battery were manufactured in the same manner as in Example 1, except that the above-described contents and the pulverization (S35) were not performed.

### Comparative Examples 4 and 5

Cathode active materials, lithium half-cells, and lithium secondary batteries were manufactured in the same manner as in Comparative Example 3, except that the type of sulfur compound was changed as shown in Table 1.

### Comparative Example 6

A cathode active material, a lithium half-cell, and a lithium secondary battery were manufactured in the same manner as in Example 1, except that pure water was not added during the drying step (S30), and the pulverization step (S35) was not performed.

### Experimental Example

### (1) XPS Analysis

The cathode active material particles prepared according to the above-described examples and comparative examples were fully filled into a square container with a width of 0.9 mm and a height of 0.9 mm to fabricate a sample.

XPS analysis was performed on the sample using the ESCALAB 250Xi instrument from Thermo Fisher Scientific.

### [XPS analysis conditions]

i) X-ray type: Al k alpha, 1486.68 eV, 900 µm Beam size
ii) Analyzer: CAE (constant analyzer energy) Mode
iii) Number of scans: 20 to 50
iv) Pass energy: 20 eV
v) Dwell time: 50 ms to 100 ms
vi) Energy step: 0.1 eV
vii) Etching depth: 10 nm

Specifically, the area of the S2p3/2 peak region (168 eV to 172 eV) for the sample was integrated to measure the sulfur signal value.

The measurement was repeated ten times, and the standard deviation of the measured ten sulfur signal values was divided by the mean of the sulfur signal values, and multiplied by 100 to calculate the relative standard deviation of the sulfur signal values.

FIG. 4 is a graph illustrating the sulfur signal value of the lithium-transition metal oxide particles of Example 1 obtained by XPS analysis.

The presence of lithium-sulfur-metal-containing portions was confirmed by measuring the relative standard deviation of tungsten signal values and the relative standard deviation of aluminum signal values in the same manner as described for the relative standard deviation of sulfur signal values.

### (2) Measurement of minimum particle diameter (Dmin)

The minimum particle diameter (Dmin) of the cathode active material particles manufactured according to the above-described examples and comparative examples was measured using a particle diameter analyzer (S3500 from Microtrac).

Specifically, cathode active material particles were dispersed in a dispersion medium and introduced into the particle diameter analyzer. A laser beam was passed through the cathode active material particles to measure the difference in diffraction patterns according to particle size. The particle size distribution was obtained based on the difference in the diffraction patterns.

The smallest particle diameter identified from the particle size distribution was defined as the minimum particle diameter (Dmin).

### (3) Measurement of sulfur content

The sulfur content based on the total weight of the lithium-transition metal oxide particles prepared according to the above-described examples and comparative examples was measured using a C/S analyzer (carbon/sulfur analyzer, CS844, LECO).

Specifically, the cathode active material particles were weighed to be between 0.02 g to 0.04 g, and introduced into a ceramic crucible, and a combustion aid (LECOCEL II) and iron chips were added to the ceramic crucible in a mass ratio of 1:1.

The ceramic crucible was placed in a high-frequency induction device, and oxygen was supplied at a flow rate of 3 L/min while the sample was combusted at 2600 °C to 2700 °C.

The sulfur-containing inorganic compound gas (e.g., SO₂ gas) generated from the combustion was passed through an infrared detection cell, and the change in infrared absorption relative to a blank was measured to determine the sulfur content based on the total weight of the lithium-transition metal oxide particles.

### (4) Measurement of residual lithium (Li₂CO₃) content

The content of Li₂CO₃, based on the total weight of the lithium-transition metal oxide particles prepared according to the above-described examples and comparative examples, was measured using a C/S analyzer (carbon/sulfur analyzer, CS844, LECO).

Specifically, the carbon content of the sample was measured by detecting CO₂ gas generated from the combustion of 1 g of the cathode active material sample, and the Li₂CO₃ content was calculated based on the atomic weights of lithium, carbon and oxygen.

### (5) Scanning electron microscope-energy dispersive X-ray spectroscopy (SEM-EDS)

Q-map images were obtained for the lithium-transition metal oxide particles of Example 2, Comparative Example 3, and Comparative Example 6 using SEM-EDS. As the SEM equipment, Apreo 2S from Thermo Fisher Scientific was used, and as the SEM-EDS equipment, FlatQuad from Bruker was used.

The SEM-EDS measurement conditions were as follows.
i) Accelerating voltage: 10 kV
ii) Beam current: 0.8 nA
iii) Detector: ETD (Everhart-Thornley Detector), FlatQuad EDS (FQ-EDS)
iv) Use case: Standard
v) Laboratory temperature: 20±5 °C
vi) Laboratory relative humidity: 65 % or less

Specifically, the samples of lithium-transition metal oxide particles were attached tightly to a carbon tape and sufficiently blown with an air gun.

Then, the sample was mounted on the SEM.

After inserting the FQ-EDS detector, the working distance (WD) was adjusted to 11 mm, and focus and alignment were adjusted.

The magnification was set to 1000x, and EDS mapping was performed for 300 seconds to obtain the Q-map image.

### (6) Evaluation of classification loss rate

The total weight of lithium-transition metal oxide particles after classification (weight after classification) was measured relative to the total weight of lithium-transition metal oxide particles before classification (weight before classification). The classification loss rate was calculated by subtracting the weight after classification from the weight before classification, dividing the result by the weight before classification, and then multiplying by 100.

### (7) Initial discharge capacity evaluation

The lithium half-cells manufactured according to the above-described examples and comparative examples were charged (CC-CV 0.1C 4.3V 0.005 C CUT-OFF) in a chamber at 25 °C, discharged (CC 0.1C 3.0V CUT-OFF), and then the battery capacity (initial discharge capacity) was measured.

### (8) Evaluation of high-temperature capacity retention rate (41 °C, 800 cycles)

The lithium secondary batteries according to the examples and comparative examples were placed in a chamber maintained at 41 °C, charged (CC-CV 0.66C 4.2V 0.1C CUT-OFF) and discharged (CC 0.66C 2.5V CUT-OFF), and then the discharge capacity was measured.

Based on the measured discharge capacity, the CUT-OFF voltage at the CUT-OFF current of 0.1C was specified so that the state of charge (SOC) reached 97%. The CUT-OFF voltage was determined to be in the range of 4.155V to 4.175V.

The lithium secondary batteries were subjected to repeated charging (CC-CV 0.66C 4.155 to 4.175V 0.1C CUT-OFF) and discharging (CC 0.66C 2.5V CUT-OFF) for 800 cycles. The discharge capacity at 800th cycle was divided by the discharge capacity at 1st cycle and multiplied by 100 to evaluate the high-temperature capacity retention rate.

### (9) Evaluation of high-temperature storage characteristics (60 °C, 16 weeks)

The lithium secondary batteries according to the examples and comparative examples were charged (CC-CV 0.1C 4.2V 0.05C CUT-OFF) and discharged (CC 0.1C 2.5V CUT-OFF), and the initial discharge capacity was measured.

The lithium secondary battery was then recharged (CC-CV 0.1C 4.2V 0.05C CUT-OFF) and discharged by 3% depth of discharge (DOD) to prepare a battery with SOC of 97%.

The battery was placed in a chamber maintained at 60 °C and stored for 16 weeks.

After 16 weeks, the battery was charged (CC-CV 0.1C 4.2V 0.05C CUT-OFF) and discharged (CC 0.1C 2.5V CUT-OFF), and the discharge capacity was measured.

The discharge capacity was divided by the initial discharge capacity and multiplied by 100 to evaluate the high-temperature storage characteristics.

### (10) Measurement of high-temperature gas generation amount

The battery with SOC of 97% prepared in the experimental example (6) was placed in a chamber maintained at 60 °C, stored for 16 weeks, and the amount of gas generation was measured.

Specifically, the battery was placed in a jig designed to match the size of the battery, a pin was inserted through the battery, and the pressure change inside the jig was measured and converted into the amount of gas generated.

The measurement and evaluation results are shown in Tables 3 and 4.

The types of metal oxides, types of sulfur compounds, sulfur content (input amount) based on the total weight of the mixture, pure water content (input amount) based on the total weight of the mixture, and pulverization of the examples and comparative examples are shown in Table 1. In the pulverization column, "∘" indicates that pulverization was performed, and "×" indicates that pulverization was not performed.

The drying temperature (internal temperature of the dryer), calcination temperature, and minimum particle diameter (Dmin) of the examples and comparative examples are shown in Table 2 below.

**[TABLE 1]**

| | Metal oxide | Sulfur compound | Sulfur input amount (ppm) | Pure water input amount (wt%) | Pulverization (○: performed, ×: not performed) |
|---|---|---|---|---|---|
| Example 1 | Al₂O₃, WO₃ | (NH₄)₂SO₄ | 3000 | 5 | ○ |
| Example 2 | Al₂O₃, WO₃ | (NH₄)₂SO₄ | 3000 | 5 | × |
| Example 3 | Al₂O₃, WO₃ | (NH₄)₂SO₄ | 4000 | 5 | × |
| Example 4 | Al₂O₃, WO₃ | (NH₄)₂SO₄ | 5000 | 5 | × |
| Example 5 | Al₂O₃, WO₃ | (NH₄)₂SO₄ | 2000 | 5 | × |
| Example 6 | Al₂O₃, WO₃ | (NH₄)₂SO₄ | 1000 | 5 | × |
| Example 7 | Al₂O₃, WO₃ | (NH₄)₂SO₄ | 3000 | 8 | × |
| Example 8 | Al₂O₃, WO₃ | (NH₄)₂SO₄ | 3000 | 12 | × |
| Example 9 | Al₂O₃, WO₃ | (NH₄)₂SO₄ | 3000 | 3 | × |
| Example 10 | Al₂O₃, WO₃ | (NH₄)₂SO₄ | 3000 | 1 | × |
| Example 11 | Al₂O₃, (NH₄)₁₀H₂(W₂O₇)₆ | TiOSO₄ | 3000 | 5 | × |
| Example 12 | Al₂O₃, WO₃ | HSO₃NH₂ | 3000 | 5 | × |
| Example 13 | TiO₂, (NH₄)₁₀H₂(W₂O₇)₆ | Al(NH₄)(SO₄)₂ | 3000 | 5 | × |
| Example 14 | TiO₂, WO₃ | NH₄SO₃NH₂ | 3000 | 5 | × |
| Example 15 | TiO₂, WO₃ | (NH₄)₂SO₄ | 3000 | 5 | × |
| Example 16 | Al₂O₃, WO₃ | (NH₄)₂SO₄ | 3000 | 5 | × |
| Example 17 | Al₂O₃, WO₃ | (NH₄)₂SO₄ | 3000 | 5 | × |
| Example 18 | Al₂O₃, WO₃ | (NH₄)₂SO₄ | 3000 | 5 | × |
| Example 19 | Al₂O₃, WO₃ | (NH₄)₂SO₄ | 3000 | 5 | × |
| Example 20 | Al₂O₃, WO₃ | (NH₄)₂SO₄ | 3000 | 5 | × |
| Example 21 | Al₂O₃, WO₃ | (NH₄)₂SO₄ | 3000 | 5 | × |
| Example 22 | Al₂O₃, WO₃ | (NH₄)₂SO₄ | 3000 | 5 | × |
| Example 23 | Al₂O₃, WO₃ | (NH₄)₂SO₄ | 3000 | 5 | × |
| Example 24 | Al₂O₃, WO₃ | (NH₄)₂SO₄ | 3000 | 5 | × |
| Example 25 | Al₂O₃, WO₃ | (NH₄)₂SO₄ | 3000 | 5 | × |
| Comparative Example 1 | - | - | - | - | × |
| Comparative Example 2 | - | (NH₄)₂SO₄ | 3000 | 5 | × |
| Comparative Example 3 | Al₂O₃, WO₃ | (NH₄)₂SO₄ | 3000 | 5 | × |
| Comparative Example 4 | Al₂O₃, WO₃ | Al(NH₄)(SO₄)₂ | 3000 | 5 | × |
| Comparative Example 5 | Al₂O₃, WO₃ | NH₄SO₃NH₂ | 3000 | 5 | × |
| Comparative Example 6 | Al₂O₃, WO₃ | (NH₄)₂SO₄ | 3000 | 0 | × |
| Comparative Example 7 | Al₂O₃, WO₃ | (NH₄)₂SO₄ | 3000 | 5 | ○ |
| Comparative Example 8 | Al₂O₃, WO₃ | (NH₄)₂SO₄ | 3000 | 5 | ○ |

**[TABLE 2]**

| | Drying temperature (°C) | Calcination temperature (°C) | Dmin (µm) |
|---|---|---|---|
| Example 1 | 170 | 400 | 2.5 |
| Example 2 | 170 | 400 | 2.5 |
| Example 3 | 170 | 400 | 2.4 |
| Example 4 | 170 | 400 | 2.5 |
| Example 5 | 170 | 400 | 2.5 |
| Example 6 | 170 | 400 | 2.5 |
| Example 7 | 170 | 400 | 2.4 |
| Example 8 | 170 | 400 | 2.3 |
| Example 9 | 170 | 400 | 2.5 |
| Example 10 | 170 | 400 | 2.4 |
| Example 11 | 170 | 400 | 2.3 |
| Example 12 | 170 | 400 | 2.5 |
| Example 13 | 170 | 400 | 2.5 |
| Example 14 | 170 | 400 | 2.5 |
| Example 15 | 170 | 400 | 2.4 |
| Example 16 | 170 | 400 | 2.0 |
| Example 17 | 170 | 400 | 1.5 |
| Example 18 | 120 | 400 | 2.5 |
| Example 19 | 190 | 400 | 2.4 |
| Example 20 | 100 | 400 | 2.5 |
| Example 21 | 250 | 400 | 2.5 |
| Example 22 | 170 | 350 | 2.4 |
| Example 23 | 170 | 450 | 2.4 |
| Example 24 | 170 | 290 | 2.5 |
| Example 25 | 170 | 510 | 2.3 |
| Comparative Example 1 | - | - | 2.5 |
| Comparative Example 2 | 170 | 400 | 2.5 |
| Comparative Example 3 | 170 | 400 | 2.4 |
| Comparative Example 4 | 170 | 400 | 2.3 |
| Comparative Example 5 | 170 | 400 | 2.4 |
| Comparative Example 6 | 170 | 400 | 2.3 |
| Comparative Example 7 | 170 | 400 | 1 |
| Comparative Example 8 | 170 | 400 | 0.5 |

The relative standard deviations of the sulfur (S) signal values/tungsten (W) signal values/aluminum (Al) signal values of lithium-transition metal oxide particles, each measured ten times through XPS analysis of the examples and comparative examples, as well as the sulfur content based on the total weight of the lithium-transition metal oxide particles, the residual lithium (Li₂CO₃) content based on the total weight of the lithium-transition metal oxide particles, and the classification loss rate, are shown in Table 3 below.

The initial discharge capacity, high-temperature capacity retention rate, high-temperature storage characteristics, and high-temperature gas generation amount of the examples and comparative examples are shown in Table 4 below.

**[TABLE 3]**

| | Relative standard deviation (%) | | | Sulfur content (ppm) | Li₂CO₃ content (ppm) | Classification loss rate (wt%) |
|---|---|---|---|---|---|---|
| | S | W | Al | | | |
| Example 1 | 4.5 | 7.5 | 6.8 | 4900 | 1907 | <0.1 |
| Example 2 | 5.4 | 8.4 | 7.2 | 4800 | 1968 | 0.8 |
| Example 3 | 5.2 | 8.7 | 7.2 | 5400 | 1784 | 0.9 |
| Example 4 | 5.0 | 8.9 | 7.8 | 6300 | 1722 | 0.8 |
| Example 5 | 5.8 | 8.5 | 7.4 | 3700 | 2522 | 0.5 |
| Example 6 | 6.0 | 8.3 | 7.2 | 2500 | 3075 | 0.6 |
| Example 7 | 7.8 | 8.5 | 7.2 | 4900 | 2522 | 1.1 |
| Example 8 | 10.5 | 8.2 | 7.8 | 4800 | 2829 | 2.1 |
| Example 9 | 8.0 | 8.9 | 7.8 | 4400 | 2645 | 1.5 |
| Example 10 | 10.2 | 8.6 | 7.8 | 3900 | 1784 | 2.5 |
| Example 11 | 5.4 | 8.6 | 7.6 | 4800 | 1968 | 0.8 |
| Example 12 | 5.3 | 8.7 | 7.7 | 4600 | 2153 | 0.8 |
| Example 13 | 5.5 | 8.8 | 7.5 | 4700 | 2030 | 0.8 |
| Example 14 | 5.5 | 9.0 | - | 4700 | 2091 | 0.8 |
| Example 15 | 5.5 | 8.4 | - | 4700 | 2030 | 0.8 |
| Example 16 | 4.8 | 8.2 | 7.2 | 4800 | 1901 | 0.5 |
| Example 17 | 4.6 | 8.5 | 7.5 | 4800 | 1896 | 0.3 |
| Example 18 | 8.2 | 8.3 | 7.2 | 4800 | 1835 | 0.9 |
| Example 19 | 9.0 | 8.5 | 7.3 | 4900 | 1994 | 0.5 |
| Example 20 | 10.3 | 8.2 | 7.5 | 4000 | 2432 | 1.2 |
| Example 21 | 10.5 | 8.6 | 7.6 | 4000 | 2215 | 1.4 |
| Example 22 | 8.5 | 8.6 | 7.8 | 4900 | 1887 | 0.5 |
| Example 23 | 8.2 | 8.7 | 7.5 | 4900 | 2005 | 0.9 |
| Example 24 | 8.1 | 8.5 | 7.8 | 4800 | 2017 | 0.5 |
| Example 25 | 8.4 | 8.6 | 7.7 | 4900 | 1956 | 0.8 |
| Comparative Example 1 | - | - | - | - | 5228 | 0.5 |
| Comparative Example 2 | 14.1 | - | - | 3800 | 3752 | 3.9 |
| Comparative Example 3 | 13.8 | 9.1 | 7.4 | 3700 | 2522 | 4.1 |
| Comparative Example 4 | 14.5 | 8.5 | 7.3 | 3500 | 2460 | 4.0 |
| Comparative Example 5 | 13.5 | 8.9 | 7.9 | 3700 | 2583 | 3.8 |
| Comparative Example 6 | 25.0 | 8.5 | 7.2 | 3100 | 4059 | 6.5 |
| Comparative Example 7 | 4.5 | 8.9 | 7.6 | 4900 | 1907 | <0.1 |
| Comparative Example 8 | 4.4 | 8.6 | 7.7 | 4900 | 1968 | <0.1 |

**[TABLE 4]**

| | Initial discharge capacity (mAh/g) | High-temperature capacity retention rate (%, 41°C, 800 cycles) | High-temperature storage characteristics (%, 60°C, 16 weeks) | High-temperature gas generation amount (mL, 60°C, 16 weeks) |
|---|---|---|---|---|
| Example 1 | 217 | 89 | 92 | 30 |
| Example 2 | 216 | 89 | 92 | 32 |
| Example 3 | 214 | 87 | 92 | 30 |
| Example 4 | 212 | 84 | 93 | 29 |
| Example 5 | 215 | 88 | 90 | 40 |
| Example 6 | 214 | 84 | 88 | 51 |
| Example 7 | 214 | 86 | 90 | 36 |
| Example 8 | 212 | 83 | 88 | 55 |
| Example 9 | 213 | 85 | 92 | 35 |
| Example 10 | 212 | 82 | 87 | 49 |
| Example 11 | 216 | 88 | 91 | 32 |
| Example 12 | 216 | 87 | 90 | 40 |
| Example 13 | 215 | 88 | 91 | 35 |
| Example 14 | 215 | 89 | 90 | 35 |
| Example 15 | 215 | 88 | 90 | 36 |
| Example 16 | 215 | 90 | 92 | 30 |
| Example 17 | 217 | 88 | 93 | 35 |
| Example 18 | 210 | 87 | 92 | 32 |
| Example 19 | 212 | 86 | 91 | 33 |
| Example 20 | 208 | 82 | 88 | 48 |
| Example 21 | 206 | 83 | 87 | 51 |
| Example 22 | 215 | 86 | 92 | 32 |
| Example 23 | 216 | 87 | 91 | 41 |
| Example 24 | 211 | 83 | 87 | 50 |
| Example 25 | 208 | 82 | 88 | 52 |
| Comparative Example 1 | 206 | 70 | 74 | 110 |
| Comparative Example 2 | 212 | 75 | 79 | 88 |
| Comparative Example 3 | 213 | 78 | 78 | 61 |
| Comparative Example 4 | 212 | 76 | 78 | 68 |
| Comparative Example 5 | 211 | 77 | 77 | 60 |
| Comparative Example 6 | 209 | 75 | 76 | 81 |
| Comparative Example 7 | 213 | 79 | 78 | 65 |
| Comparative Example 8 | 214 | 75 | 76 | 70 |

Referring to Tables 1 to 4, in the examples, where the minimum particle diameter (Dmin) of the lithium-transition metal oxide particles was greater than 1 µm and the relative standard deviation was 10.5% or less, the initial discharge capacity, high-temperature capacity retention rate, and high-temperature storage characteristics were improved, and the high-temperature gas generation amount was reduced compared to the comparative examples.

In Example 4, where the sulfur content was greater than 6000 ppm based on the total weight of the lithium-transition metal oxide particles, the initial discharge capacity was relatively reduced, and the high-temperature capacity retention rate was deteriorated compared to the other examples.

In Example 6, where the sulfur content was less than 1000 ppm based on the total weight of the lithium-transition metal oxide particles, the residual lithium content and the high-temperature gas generation amount were relatively increased compared to the other examples, and the high-temperature capacity retention rate and the high-temperature storage characteristics were deteriorated.

In Example 8, where the amount of pure water added was greater than 11 wt% based on the total weight of the mixture, agglomerates of small-sized particles and sulfur compounds were formed, and the relative standard deviation was increased. Accordingly, the residual lithium content and the high-temperature gas generation amount were relatively increased compared to the other examples, and the initial discharge capacity, high-temperature capacity retention rate, and the high-temperature storage characteristics were deteriorated.

In Example 10, where the amount of pure water added was less than 2 wt% based on the total weight of the mixture, the classification loss rate and the high-temperature gas generation amount were relatively increased compared to the other examples, and the initial discharge capacity, high-temperature capacity retention rate, and the high-temperature storage characteristics were deteriorated.

In Examples 20 and 21, where the drying temperature (internal temperature of the dryer) was outside 110 °C to 240 °C, the initial discharge capacity, high-temperature capacity retention rate, and high-temperature storage characteristics were relatively degraded compared to the other examples, and the classification loss rate and high-temperature gas generation amount were increased.

In Examples 24 and 25, where the calcination temperature was outside 300 °C to 500 °C, the initial discharge capacity, high-temperature capacity retention rate, and high-temperature storage characteristics were relatively degraded compared to the other examples, and the high-temperature gas generation amount was increased.

In Comparative Example 1, where no metal oxide and sulfur compound were added, the initial discharge capacity, high-temperature capacity retention rate, and high-temperature storage characteristics were degraded compared to the examples, and the high-temperature gas generation amount was increased.

In Comparative Examples 2 to 5, where the sulfur compound aqueous solution was wet mixed with the first preliminary lithium-transition metal oxide particles without adding a solvent or drying after dry mixing of the sulfur compound, the initial discharge capacity, high-temperature capacity retention rate, and high-temperature storage characteristics were degraded and the amount of high-temperature gas generation was increased compared to the examples.

In Comparative Example 6, where only dry mixing was performed without adding the solvent, the initial discharge capacity, high-temperature capacity retention rate, and high-temperature storage characteristics were degraded, and the amount of high-temperature gas generation was increased compared to the examples.

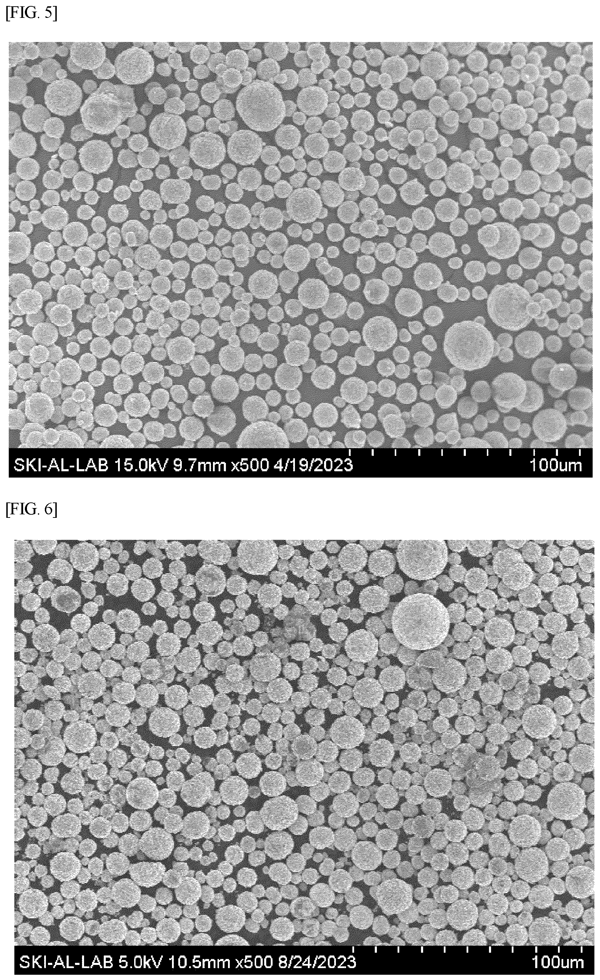

FIGS. 5 to 9 are scanning electron microscope (SEM) images of the cathode active materials of Examples 1, 2, 8, and 10 and Comparative Example 8, respectively.

Referring to Tables 1 to 4 and FIGS. 5, 6 and 9, in Comparative Examples 7 and 8, where the minimum particle diameter (Dmin) was 1 µm or less despite the relative standard deviation being 10.5% or less, the initial discharge capacity, high-temperature capacity retention rate and high-temperature storage characteristics were degraded, and the high-temperature gas generation amount was increased compared to Example 1, in which pulverization was performed under the same conditions.

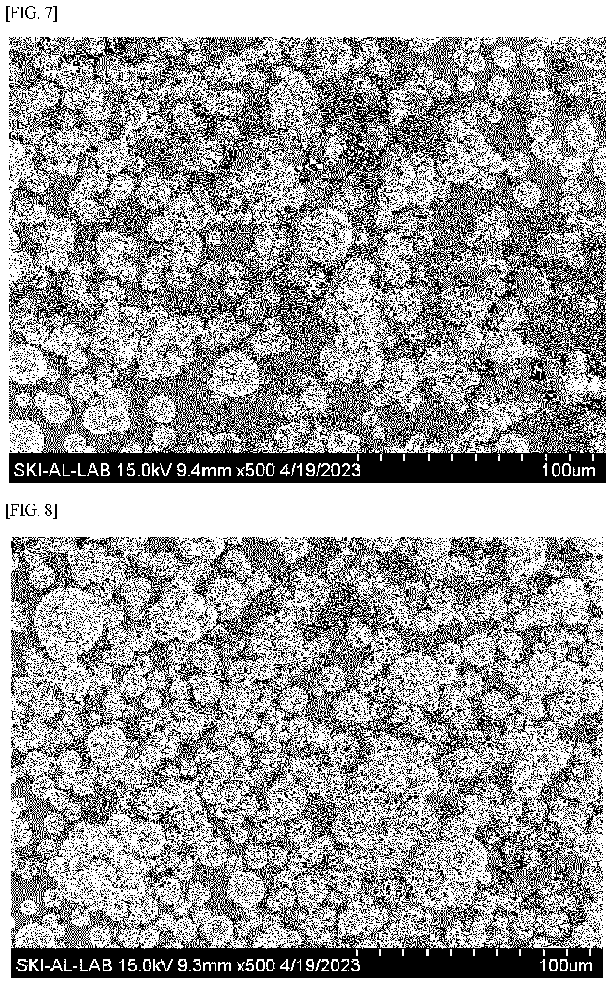

Referring to Tables 1 to 4 and FIGS. 7 and 8, the lithium-sulfur-metal-containing portion may be uniformly formed, while suppressing the formation of small-sized particles and agglomerates of sulfur compounds, depending on the amount of solvent added.

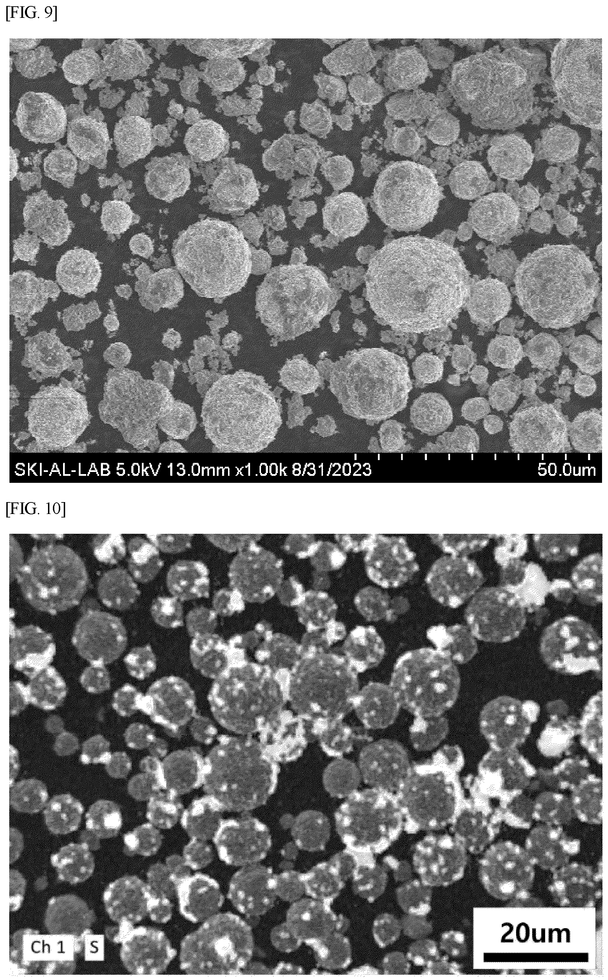

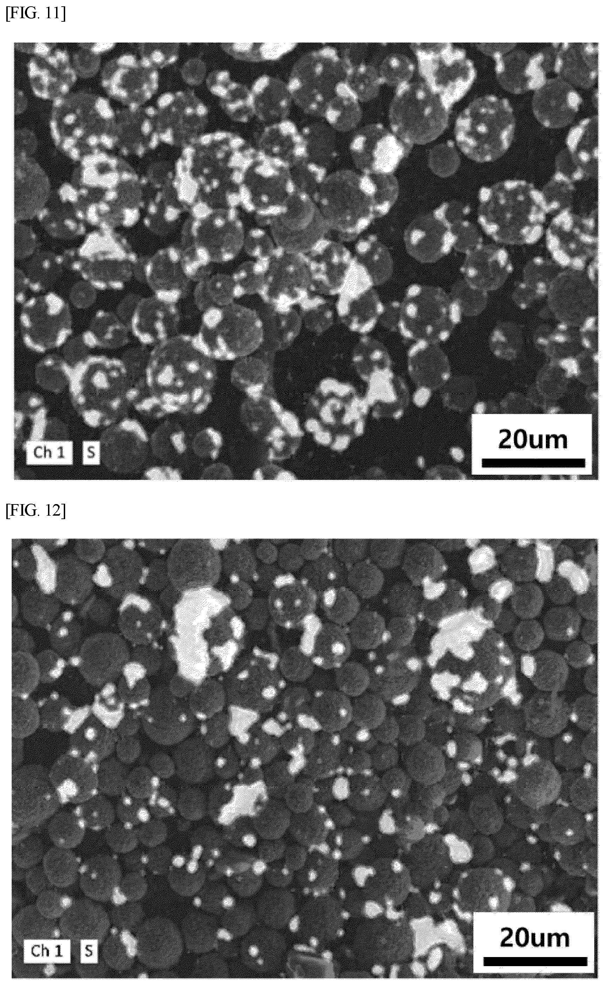

FIGS. 10 to 12 are Q-map images of the cathode active materials of Example 2 and Comparative Examples 6 and 8, respectively, obtained by scanning electron microscope-energy dispersive X-ray spectroscopy (SEM-EDS).

Referring to Tables 1 to 4 and FIGS. 10 to 12, in Comparative Example 3, where a sulfur compound aqueous solution was used instead of sulfur compound powder, and in Comparative Example 6, where no solvent was added, the lithium-sulfur-metal-containing portion was formed non-uniformly compared to Example 2.

## Claims

1. A cathode active material for a lithium secondary battery comprising:
lithium-transition metal oxide particles comprising a lithium-sulfur-metal-containing portion and having a minimum particle diameter (Dmin) of greater than 1 µm,
wherein a relative standard deviation of the sulfur signal values of the lithium-transition metal oxide particles, as measured repeatedly ten times by X-ray photoelectron spectroscopy (XPS) analysis, is 10.5% or less.

2. The cathode active material for a lithium secondary battery according to claim 1, wherein the cathode active material comprises a plurality of the lithium-transition metal oxide particles, and the XPS analysis is performed on a square area having a width of 0.9 mm and a height of 0.9 mm, which is filled with a plurality of lithium-transition metal oxide particles.

3. The cathode active material for a lithium secondary battery according to claims 1 or 2, wherein the relative standard deviation is 4.5% to 9.0%.

4. The cathode active material for a lithium secondary battery according to one of claims 1 to 3, wherein the lithium-sulfur-metal-containing portion comprises at least one selected from the group consisting of Al, Ti, Zr, W, Sr, Ba, Ta, Nb, Mo, K, B and Na.

5. The cathode active material for a lithium secondary battery according to one of claims 1 to 4, wherein the lithium-transition metal oxide particles comprise secondary particles formed by agglomeration of a plurality of primary particles, and the lithium-sulfur-metal-containing portion is positioned between the primary particles or on the surface of the secondary particles.

6. The cathode active material for a lithium secondary battery according to one of claims 1 to 5, wherein the sulfur content of the lithium-transition metal oxide particles is 3000 ppm to 6000 ppm based on a total weight of the lithium-transition metal oxide particles.

7. A lithium secondary battery comprising:
the cathode comprising the cathode active material for a lithium secondary battery according to one of claims 1 to 6; and
an anode disposed opposite to the cathode.

8. A method for preparing a cathode active material for a lithium secondary battery comprising:
preparing first preliminary lithium-transition metal oxide particles;
dry mixing the first preliminary lithium-transition metal oxide particles, a metal oxide, and a sulfur compound to form a mixture;
preparing second preliminary lithium-transition metal oxide particles by adding a solvent to the mixture and drying it; and
preparing lithium-transition metal oxide particles including a lithium-sulfur-metal-containing portion and having a minimum particle diameter (Dmin) of greater than 1 µm by calcining the second preliminary lithium-transition metal oxide particles at a temperature higher than that of the drying,
wherein a relative standard deviation of the sulfur signal values of the lithium-transition metal oxide particles, as measured repeatedly ten times by X-ray photoelectron spectroscopy (XPS) analysis, is 10.5% or less.

9. The method for preparing a cathode active material for a lithium secondary battery according to claim8, wherein the metal oxide comprises at least one selected from the group consisting of Al₂O₃, TiO₂, Ti₂O₃, ZrO₂, H₃BO₃, B₂O₃, SrO₂, SrAl₂O₄, SrTiO₃, SrWO₄, BaO, WO₃, (NH₄)₁₀H₂(W₂O₇)₆, MgO, Ta₂O₅, Nb₂O₅, MoO₃, H₄[W₁₂SiO₄₀], H₄SiO₄·12MoO₃ and (NH₄)₂MoO₄.

10. The method for preparing a cathode active material for a lithium secondary battery according to claims 8 or 9, wherein the sulfur compound comprises at least one selected from the group consisting of (NH₄)₂SO₄, HSO₃NH₂, NH₄SO₃NH₂, Al₂(SO₄)₃, AlK(SO₄)₂, Al(NH₄)(SO₄)₂, Ti(SO₄)₂, TiOSO₄ and SrSO₄.

11. The method for preparing a cathode active material for a lithium secondary battery according to one of claims 8 to 10, wherein a sulfur content of the sulfur compound is 2000 ppm to 4000 ppm based on the total weight of the mixture.

12. The method for preparing a cathode active material for a lithium secondary battery according to one of claims 8 to 11, wherein a content of the solvent is 2% by weight to 11% by weight based on the total weight of the mixture.

13. The method for preparing a cathode active material for a lithium secondary battery according to one of claims ,8 to 12 wherein the drying is performed at a temperature of 110 °C to 240 °C.

14. The method for preparing a cathode active material for a lithium secondary battery according to one of claims 8 to 13, wherein the calcination is performed at a temperature of 300 °C to 500 °C.

15. The method for preparing a cathode active material for a lithium secondary battery according to one of claims 8 to 14, further comprising pulverizing the mixture after the drying and before the calcination.
